# EUROPÄISCHE PATENTSCHRIFT

(11) **EP 2 097 329 B1**
(45) Veröffentlichungstag und Bekanntmachung des Hinweises auf die Patenterteilung: **23.06.2010**
(21) Anmeldenummer: 07816190.8
(22) Anmeldetag: 15.10.2007
(51) Int. Cl.: B65D 5/74, B29C 45/00

(54) **HALBFABRIKAT ZUR FERTIGUNG EINER ÖFFNUNGSVORRICHTUNG**
SEMI-FINISHED PRODUCT FOR PRODUCING AN OPENING APPARATUS
SEMI-PRODUIT POUR FABRIQUER UN DISPOSITIF D'OUVERTURE

(30) Priorität: 23.10.2006 CH 16782006
(43) Veröffentlichungstag der Anmeldung: 09.09.2009
(73) Patentinhaber: Deltona Innovations AG, 8124 Maur (CH)
(72) Erfinder: DUBACH, Werner Fritz, 8124 Maur (CH)
(74) Vertreter: Schneider Feldmann AG Patent- und Markenanwälte
(86) Internationale Anmeldenummer: PCT/CH2007/000507
(87) Internationale Veröffentlichungsnummer: WO 2008/049249

(56) Entgegenhaltungen:
- EP-A- 0 318 603
- EP-A- 1 088 764
- EP-A- 1 415 926
- WO-A-2004/041669
- DE-A1- 19 712 334

## Beschreibung

Die vorliegende Erfindung betrifft ein Halbfabrikat zur Fertigung einer verschliessbaren Öffnungsvorrichtung für eine versiegelte Verpackung, die ein fliessfähiges Medium enthält, wobei die Vorrichtung einen Ausgussstutzen mit Flansch aufweist, sowie ein zylindrisches Schneidelement, welches mit einem oberen, eine plane Fläche definierenden Rand versehen ist, während der untere Rand mit einem oder mehreren Zähnen ausgestattet ist, und dessen innere Mantelfläche mit in radialer Richtung wirkenden Mitnehmern versehen ist, die mit Mitnehmern an der Innenseite der Deckfläche in einer Schraubkappe zusammen wirken.

Eine verschliessbare Öffnungsvorrichtung der eingangs genannten Art ist aus der EP-A-1088764 bekannt. Hierbei wird ein Prinzip angewendet, welches in der Verschlusstechnik allgemein üblich ist, indem man mehrteilige Verschlüsse so fertigt, dass zwei Teile übereinander angeordnet und über Sollbruchstellen miteinander verbunden einstückig gespritzt werden. Hierbei wird einerseits der Aufwand an Werkzeugen reduziert und zum anderen die Montage vereinfacht, da die über Sollbruchstellen miteinander verbundenen Teile bereits in ihrer exakt ausgerichteten Relativlage zueinander angeordnet sind und somit lediglich zusammen geschoben werden müssen. Bei dem aus dem Stand bekannten Lösungsansatz besteht das Halbfabrikat lediglich aus einer Verbindung eines Ausgussstutzens mit einem Flansch zusammen mit einem zylindrischen Schneidelement. Die Kombination eines Halbfabrikates zur Fertigung einer verschliessbaren Öffnungsvorrichtung wie weiter oben beschrieben, bei dem nicht nur der Ausgussstutzen mit dem Schneidelement, sondern zusätzlich auch noch mit einer Schraubkappe einstückig verbunden hergestellt wird, wurde von der Fachwelt als nicht realisierbar angesehen. Der Grund für diese Überlegung liegt darin, dass immer davon ausgegangen wurde, dass sämtliche miteinander verbundenen Teile für die Endmontage in der korrekten Lage bereits miteinander verbunden sein sollten um den erforderlichen Nutzen zu haben.

Unter diesen Voraussetzungen lassen sich aber alle drei Teile nicht in einem einstückigen Halbfabrikat fertigen. Der Grund hierzu ist, dass die Innendurchmesser der drei Teile unterschiedlich sind und die Schraubkappe einseitig verschlossen ist. In der für die Montage korrekten Position wäre somit das Schneidelement mit seinem kleinsten Innendurchmesser zu unterst und nachfolgend darüber der Ausgussstutzen mit seinem Flansch und hierüber wiederum die Schraubkappe dessen Innendurchmesser am grössten ist. Damit lässt sich aber der Kern des Werkzeuges nicht aus einem solchen Halbfabrikat herausziehen. Wäre die Schraubkappe lediglich ein beidseitig offenes zylindrisches Element, so wäre dies möglich, doch entspricht dies natürlich nicht den Tatsachen. Daher ist aus dem Stand der Technik lediglich die Fertigung eines Halbfabrikates, bei dem das Schneidelement mit dem Ausgussstutzen einstückig gefertigt ist, bekannt. Ein solches Halbfabrikat ist aus der erwähnten EP-A-1088764 als auch aus der EP-A-1084060 bekannt. Die vorliegende Erfindung hat sich daher zur Aufgabe gestellt, ein Halbfabrikat zur Fertigung einer verschliessbaren Öffnungsvorrichtung zu schaffen, bei dem alle drei Teile der verschliessbaren Öffnungsvorrichtung in einem Stück spritzgusstechnisch hergestellt werden kann.

Die Erfindung betrifft ferner ein Verfahren zur Fertigung einer verschliessbaren Öffnungsvorrichtung aus dem erfindungsgemässen Halbfabrikat. Des Weiteren betrifft die Erfindung eine verschliessbare Öffnungsvorrichtung der Eingangs genannten Art, die sich aus der Verwendung des erfindungsgemässen Halbfabrikates ergibt.

Weitere vorteilhafte Ausgestaltungsformen des Halbfabrikates sowie des Verfahrens ergeben sich aus den abhängigen Patentansprüchen.
Die Bildung eines Halbfabrikates, bei dem sich alle drei Teile der verschliessbaren Öffnungsvorrichtung gemäss Oberbegriff des Patentanspruches 1 einstückig fertigen lassen, hat nicht nur den Vorteil, hierdurch Werkzeugkosten zu sparen in dem nur eine einzige Spritzgussform erforderlich ist, sondern das Montageverfahren insgesamt wird vereinfacht, wesentlich preiswerter und eine wesentlich geringere Ausschussrate ist entsprechend zu erwarten.

Bei der bisher bekannten Lösung lässt sich zwar in einem einzigen einfachen Verfahrensschritt das Schneidelement und der Ausgussstutzen axial in die definitive Position zusammenschieben, doch das Aufbringen der Schraubkappe ist relativ komplex. Die beiden bereits montierten Teile müssen in einer vorgegebenen Position zu einer weiteren Montagestation gebracht werden. Hier muss die Schraubkappe in der axial korrekt ausgerichteten Position über dem Ausgussstutzen gebracht werden und dann in eine definierte radialer Ausrichtung zum Schneidelement gebracht werden, damit die Mitnehmer in der Schraubkappe mit den Mitnehmern im Schneidelement in korrekter relativ Position zueinander sind, worauf die Teile dann zusammen geschoben werden können und die Öffnungsvorrichtung in der gebrauchsfertigen Lage ist.

Gerade dieser Montageverfahrensanteil ist komplex, da die radiale Ausrichtung der beiden Teile hochpräzis sein muss, während gleichzeitig beim ersten Montageschritt bei dem das Schneidelement in den Ausgussstutzen geschoben wird, oftmals auch eine geringe radiale Verschiebung erfolgt, da bei dieser Bewegung das Aussengewinde des Schneidelementes in das Innengewinde des Ausgussstutzens geschoben wird und geringe radiale Verschiebungen kaum vermeidbar sind. Sind diese radialen Verschiebungen grösser als ein gewisser Toleranzbereich, so wird im nachfolgenden Montageschritt oftmals die gesamte verschliessbare Öffnungsvorrichtung vernichtet.

In der nachfolgenden Beschreibung werden das erfindungsgemässe Halbfabrikat sowie das Verfahren zur Fertigung der verschliessbaren Öffnungsvorrichtung aus dem Halbfabrikat an Hand der beiliegenden Zeichnungen erläutert.

Es zeigt:
- Figur 1: einen axialen Vertikalschnitt durch das Halbfabrikat im Zustand, wie dieses aus einer entsprechenden Spritzgussform kommt;
- Figur 2: zeigt eine isometrische Darstellung des Halbfabrikates gemäss Figur 1, in Sicht schräg von oben mit Blick in die Schraubkappe und
- Figur 3: eine ebensolche isometrische Darstellung wie in Figur 2, mit einem Blick schräg von unten mit Sicht in den Ausgussstutzen;
- Figur 4: zeigt das Halbfabrikat nach Figur 1, bei der die Schraubkappe abgetrennt und gewendet dargestellt ist in einer Zwischenlage der Montage, während
- Figur 5: die erfindungsgemässe Verschliessvorrichtung im vollständig montierten Zustand wiederum in einem axialen Vertikalschnitt darstellt.
- Figur 6: zeigt schematisch das Montageverfahren in seinen drei Schritten.

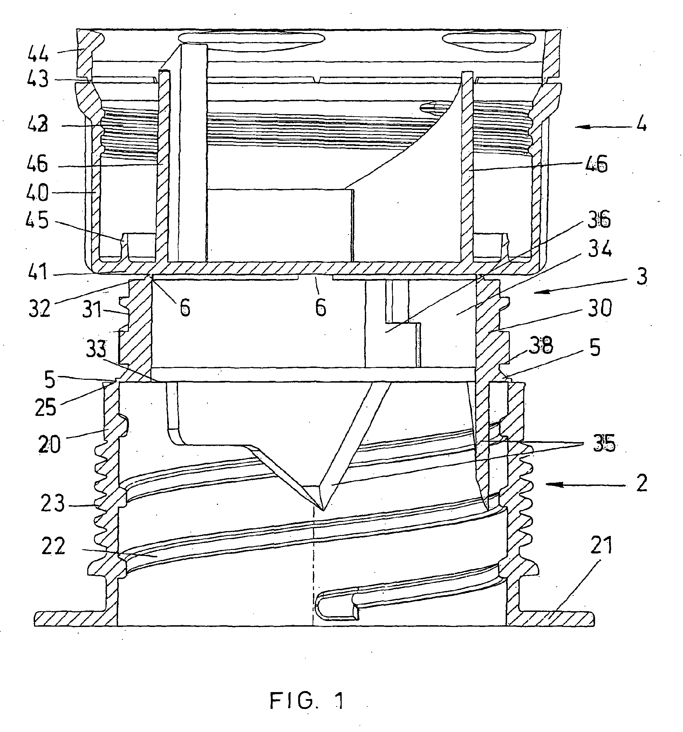

Die Figur 1 zeigt einen axialen Vertikalschnitt durch das Halbfabrikat gemäss der Erfindung, welches gesamthaft mit 1 bezeichnet ist. Das Halbfabrikat 1 ist einstückig, wobei die verschliessbare Öffnungsvorrichtung, welche im zusammen gebauten Zustand mit 100 bezeichnet ist, aus drei zusammen gespritzten Teilen besteht. Diese drei Teile sind in der Figur von unten nach oben ein Ausgussstutzen 2 über den ein Schneidelement 3 angeordnet ist, über dem sich wiederum eine Schraubkappe 4 befindet.

Der Ausgussstutzen 2 hat eine zylindrische Mantelwand 20, die den eigentlichen Ausguss bildet und endständig an seinem unteren Rand einen Flansch 21 aufweist. Die zylindrische Mantelwand besitzt ein Innengewinde 22 mit einer grossen Gewindesteigung und einem Aussengewinde 23, welches als Feingewinde ausgebildet ist, mit einer relativ geringen Steigung. Der Querschnitt des Innengewindes weist eine in etwa trapezförmige Querschnittsform auf. Diese Querschnittsform erlaubt trotz einer gewissen, relativ grossen Gewindehöhe das Zusammenschieben eines Elementes mit dem zweiten Element mit gegengleichem Aussengewinde.

Das Element mit dem gegengleichen Aussengewinde passend zum Innengewinde 22, ist das Schneidelement 3. Das Schneidelement 3 besteht aus einem zylindrischen Mantelwandabschnitt 30 mit einem Aussengewinde 31, welches passend zum Innengewinde 22 des Ausgussstutzens 2 gestaltet ist. Der zylindrische Mantelwandabschnitt 30 ist an seinem oberen Ende mit einem oberen Rand 32 versehen, der im Wesentlichen plan gestaltet ist. Am unteren Rand 33 sind hingegen ein oder mehrere Zähne 35 angeformt. Die spezielle Ausgestaltung dieser Zähne ist nicht Gegenstand dieser Erfindung. In der Zeichnung ist ein Zahn 35 in der Aufsicht und ein zweiter Zahn im Schnitt erkennbar.

Der zylindrische Mantelwandabschnitt 30 hat eine innere Mantelwandfläche 34 an dem mindestens ein, vorzugsweise jedoch zwei Mitnehmer 36 angeformt sind. In der Zeichnung ist ein Mitnehmer 36 erkennbar. Der gegebenenfalls vorhandene zweite Mitnehmer ist üblicherweise dem ersten Mitnehmer diametral gegenüber angeordnet. Der Mitnehmer 36 besteht im Wesentlichen aus einem konsolenartigen Vorsprung, der an der inneren Mantelwandfläche 34 angeformt ist.

Wie bereits erwähnt, erkennt man über dem Schneidelement 3 eine Schraubkappe 4. Während der Ausgussstutzen 2 und das Schneidelement 3 in der korrekten Montagelage relativ zu einander angeordnet sind und sich lediglich axial verschoben über einander befinden, ist die Schraubkappe in einer Lage angeordnet, die nicht der Zusammenbaulage entspricht. Viel mehr ist die Schraubkappe praktisch auf den Kopf gestellt, über den Ausgussstutzen 2 angeordnet.

Die Schraubkappe 4 besitzt ebenfalls eine Mantelwand 40, die einseitig von der Deckfläche 41 abgedeckt ist. Die Mantelwand 40 besitzt ein Innengewinde 42, welches passend zum Aussengewinde 23 des Ausgussstutzens 2 gestaltet ist. Fluchtend mit der Mantelwand 40 ist an dessen unteren Ende über Sollbruchstellen 43 ein Garantieband 44 angeformt. Auf der Innenfläche der Deckfläche 41 sind zwei Mitnehmer 46 angeordnet, die im zusammengebauten Zustand der verschliessbaren Öffnungsvorrichtung 100 mit den Mitnehmern 36 im Schneidelement 3 zusammenwirken. Konzentrisch zur Mantelwand 40 der Schraubkappe 4, ist eine kurze Ringwand 45 zwischen der Mantelwand 40 und den Mitnehmern 46 verlaufend angeformt. Die Ringwand 45 hat eine nach aussen gerichtete Ringwulst, die im geschlossenen Zustand der verschliessbaren Öffnungsvorrichtung dichtend an der Innenseite der Mantelwand 20 des Ausgussstutzens 2 zum Anliegen kommt.

Die einzelnen Teile 2, 3 und 4 des Halbfabrikates 1 sind über Sollbruchstellenbrücken miteinander verbunden. Die Verbindung zwischen dem Ausgussstutzen 2 und dem Schneidelement 3 bilden erste Sollbruchstellenbrücken 5, während die Verbindung zwischen dem Schneidelement 3 und der Schraubkappe 4 zweite Sollbruchstellenbrücken 6 bilden. Die ersten Sollbruchstellenbrücken 5 sind zum einen am oberen planen Rand der zylindrischen Mantelwand 20 des Ausgussstutzens 2 angeformt und an der anderen Seite im unteren Randbereich des unteren Randes 33 des Schneidelementes 3 peripher nach aussen gerichtet angeformt. Das Schneidelement 3 hat im Bereich des unteren Randes 33 oberhalb der Zähne 35 einen nach Aussen auskragenden umlaufenden Absatz 38. Im Bereich dieses Absatzes 38 sind bevorzugterweise die mehreren ersten Sollbruchstellenbrücken 5 vorhanden. Diese haben im Wesentlichen eine etwa dreieckige Form, deren spitze Enden radial nach aussen gerichtet sind und im Bereich des oberen Randes 25 des Ausgussstutzens mit demselben verbunden sind. Auf diese Weise lassen sich relativ stabile Sollbruchstellenbrücken bilden, die zwar problemlos maschinell trennbar sind, trotzdem aber beim Entformungsvorgang und dem nachfolgenden Transfer in eine Montagevorrichtung nicht ungewollt zerstört werden. Die ersten Sollbruchstellenbrücken 5 haben einen oberen, oder einen unteren Rand, der exakt radial zur Mantelwand des Ausgussstutzens 5 hin gerichtet ist und mindesten annähernd mit dem oberen Rand 25 der Mantelwand 20 des Ausgussstutzens fluchtet. Die ersten Sollbruchstellenbrücken 5 können zu einer einzigen umlaufenden, zerstörbaren, ringförmigen Membrane gestaltet sein. Durch eine solche Ausgestaltung lässt sich der Materialdurchgang erhöhen, um eine entsprechend höhere Füllgeschwindigkeit der Spritzgussform zu erreichen.

Die Verbindung zwischen dem Schneidelement 3 und der Schraubkappe 4 formen zweite Sollbruchstellenbrücken 6. Diese Sollbruchstellenbrücken 6 können praktisch direkt fluchtend mit der inneren Mantelwandfläche 34 gestaltet sein. Sie führen von dort direkt auf die Oberfläche der Deckfläche 41 der Schraubkappe 4. Gegebenfalls kann die Deckfläche 41 auf der Oberfläche eine Vertiefung aufweisen, deren Durchmesser etwa dem Innendurchmesser des Schneidelementes 3 entspricht. Damit entsteht am Übergangsbereich der Vertiefung zum erhöhten Randbereich eine Kante und die zweiten Sollbruchstellenbrücken 6 können direkt auf diese Kante ausgerichtet sein.

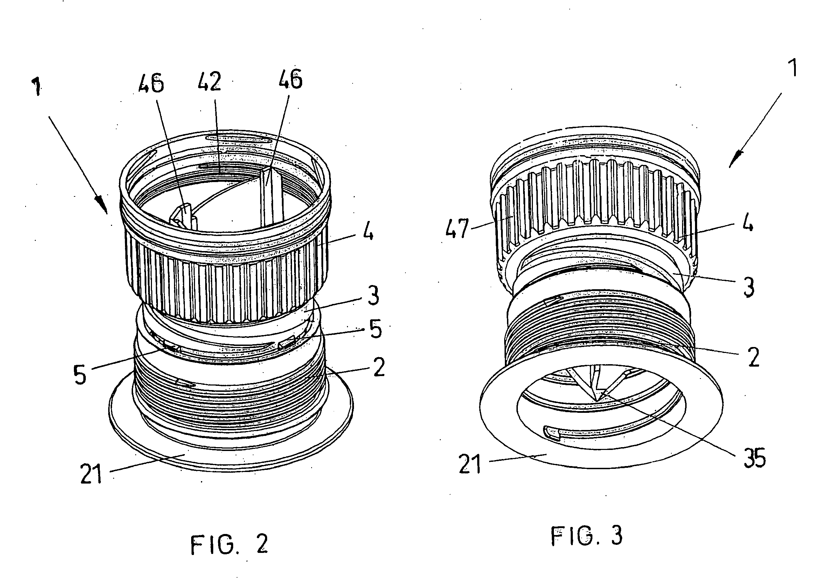

Aus den Figuren 2 und 3 ist leicht erkennbar, dass sich ein Halbfabrikat 1 gemäss der Erfindung mit einer relativ einfachen Form mit Schieber fertigen lässt. Die Trennung der Spritzgussform wird hierbei so gelegt, dass die Trennebene zwischen der Deckfläche der Schraubkappe 4 und dem Schneidelement 3 erfolgt. Auf diese Weise lassen sich die Mitnehmerteile 36 sowie die Zähne 35 in der einen Spritzgussformhälfte und die Mitnehmer 46 sowie die Ringwand 45 in der anderen Spritzgussform problemlos herstellen, und alle an der äusseren Peripherie des Halbfabrikates angeformten Elemente lassen sich durch die Schieber einfach fertigen und entformen. Solche Formgestaltungsmittel an der Peripherie kann beispielsweise auch eine Rippung 47 an der Mantelwandaussenseite der Schraubkappe 4 sein. Eine solche Rippung 47 erhöht die Griffigkeit der Schraubkappe. Während man in der Figur 2 die ersten Sollbruchstellenbrücken 5 deutlich erkennt, bleiben die zweiten Sollbruchstellenbrücken 6 sowohl in der Ansicht gemäss der Figur 2, als auch in der Ansicht gemäss der Figur 3 unsichtbar. Diese liegen im Spalt zwischen dem zylindrischen Mantelwandabschnitt 30 und der Deckfläche 41 der Schraubkappe 4 und sind folglich lediglich im axialen Vertikalschnitt ersichtlich.

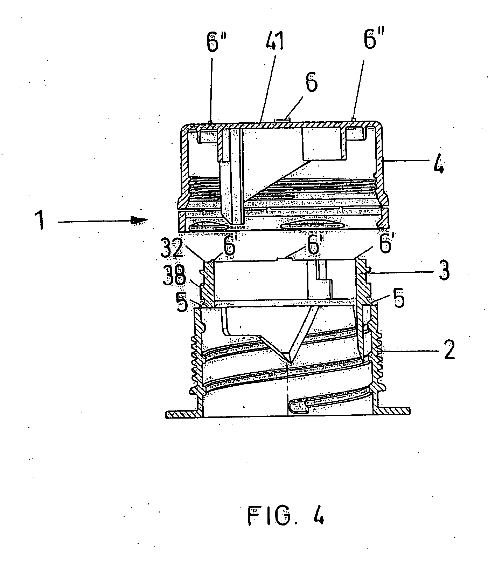

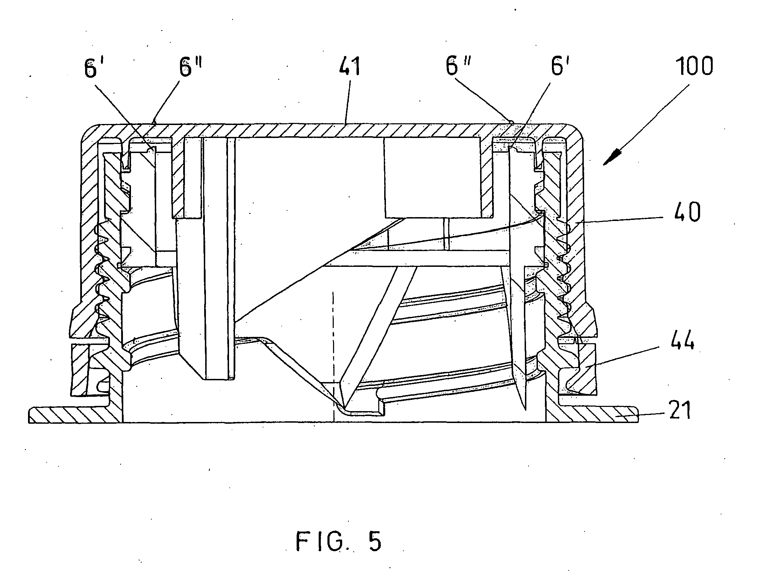

In der Figur 4 ist das Halbfabrikat nicht mehr in seiner Fertigungslage erkennbar, sondern hier ist bereits die Schraubkappe 4 vom Schneidelement 3 getrennt. Das Schneidelement 3 ist jedoch nach wie vor mit dem Angussstutzen 2 verbunden. Entsprechend sind die ersten Sollbruchstellenbrücken 5 noch unzerstört, während die zweiten Sollbruchstellenbrücken 6 bereits zerstört sind und lediglich noch deren Ansatzreste 6' und 6" ersichtlich sind. Mit 6' sind die Reste bezeichnet, die am oberen Rand 32 des Schneidelementes 3 erkennbar sind, während mit 6" die Sollbruchstellenbrücke-Reste bezeichnet sind, welche auf der Oberfläche der Deckfläche 41 erkennbar sind. Diese Reste sind typische Erkennungsmerkmale, die es erlauben, zu ersehen, dass die Schraubkappe 4 Teil eines erfindungsgemässen Halbfabrikates 1 gewesen ist. Der Patentanspruch der sich auf die verschliessbare Öffnungsvorrichtung richtet, nimmt dieses Erkennungsmerkmal als wesentlichstes kennzeichnendes Merkmal auf. Ohne dieses Merkmal lässt sich an der verschliessbaren Öffnungsvorrichtung 100 wie in der Figur 5 dargestellt, kaum noch erkennen, ob die Öffnungsvorrichtung aus einem Halbfabrikat 1 gemäss der Erfindung entstanden ist, oder aus zwei Teilen, nämlich einem Halbfabrikat das nur aus Ausgussstutzen und Schneidelement und einer getrennten Schraubkappe gefertigt worden ist, oder einer Öffnungsvorrichtung, die aus drei einzelnen Teilen zusammengebaut worden ist. Aus der Figur 5 ist auch klar das Zusammenwirken der einzelnen Elemente ersichtlich, ohne dass hierzu nochmals auf diese Teile eingegangen werden muss.

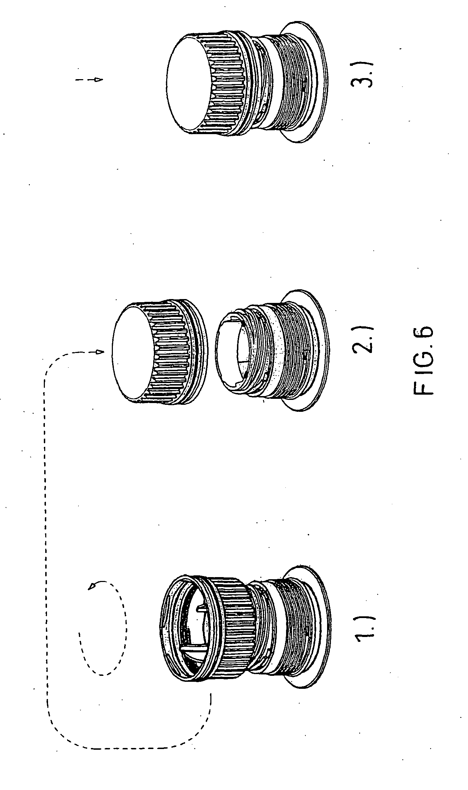

Letztlich wird mit Bezug auf die Figur 6 das ebenfalls erfindungsgemässe Montageverfahren beschrieben mittels dem, aus dem Halbfabrikat 1 eine zusammengebaute verschliessbare Öffnungsvorrichtung 100 entsteht. Im ersten Schritt, der in der Figur 1 ganz links dargestellt ist, ist das Halbfabrikat 1 in der Lage dargestellt, in der es fertig aus der Spritzgussform kommt. In einem ersten Schritt wird man nun die Schraubkappe 4 fassen, während gleichzeitig der Ausgussstutzen mit dem angeformten Schneidelement 3 gehalten ist. Nun wird eine Relativbewegung der Schraubkappe 4 durchgeführt. In der Zeichnung ist diese Relativbewegung eine rotative Bewegung, doch kann dies selbstverständlich genau so gut eine translatorische Bewegung sein. Durch diese Relativbewegung werden die zweiten Sollbruchstellenbrücken 6 zwischen der Schraubkappe 4 und dem Schneidelement 3 getrennt. Da die zweiten Sollbruchstellenbrücken 6 wesentlich dünner gestaltet sind als die ersten Sollbruchstellenbrücken 5, bleiben die ersten Sollbruchstellenbrücken 5 unzerstört. Die Sollbruchstellenbrücken können aber durchaus auch im Querschnitt alle gleich gestaltet sein, jedoch in der Anzahl unterschiedlich, aber auch dies ist nicht erforderlich. Sogar wenn die zweiten Sollbruchstellenbrücken 6 stärker ausgestaltet sind als die ersten Sollbruchstellenbrücken 5, lässt sich das Verfahren problemlos durchführen, doch wird man dann vernünftigerweise, beziehungsweise zwingenderweise einerseits die Schraubkappe 4 fassen und andererseits aber statt dem Ausgussstutzen 2 das Schneidelement 3 festhalten. Für eine entsprechend gestaltete Montagevorrichtung dürfte es vermutlich einfacher sein, den Ausgussstutzen 2 festzuhalten, beispielsweise durch Klemmung des Flansches 21.

Nach der Trennung der Schraubkappe 4 vom Rest des Halbfabrikates 1 wird nun die Kappe um 180 Grad gewendet, so dass die Innenseite der Schraubkappe zur Durchgangsöffnung des Ausgussstutzens hin gerichtet ist. Da einerseits der Halbfabrikatrest gehalten ist und andererseits die Schraubkappe 4 bereits in der Position wie als Halbfabrikat angespritzt und gefasst worden ist, ist die relative radiale Ausrichtung der Teile vollständig bestimmt und eine weitere Ausrichtung ist somit nicht mehr erforderlich. Eine radiale Verschiebung von Schneidelement 3 relativ zum Ausgussstutzen 2 ist nicht möglich, da diese Teile nach wie vor einstückig zusammen hängen. Eine radiale Verschiebung der Schraubkappe 4 relativ zum Schneidelement 3, beziehungsweise zum Ausgussstutzen 2, kann durch eine entsprechende Rippung 47 beziehungsweise durch die korrekte mechanische Erfassung der Schraubkappe durch die Montagevorrichtung vermieden werden.

Im letzten, dritten Verfahrensschritt befindet sich die Schraubkappe 4 axial zentrisch auf den Rest des Halbfabrikates 1 ausgerichtet und bereits so gewendet, dass die Öffnung der Schraubkappe zur Öffnung des Ausgussstutzens hin gerichtet ist. In dieser Situation kann nun die Montage durch eine einfache axiale Bewegung der Schraubkappe 4 auf den Rest des Halbfabrikates 1 zu erfolgen, da zum einen die Teile korrekt ineinander gesteckt werden und andererseits das Innengewinde 42 der Schraubkappe 4 über das Aussengewinde 23 des Ausgussstutzens 2 ratschenartig fährt und dabei das Schneidelement 3 mit seinem oberen Rand 32 auf der Innenfläche der Deckfläche 41 der Schraubkappe zum Anliegen kommt, so dass unter dem herrschenden Druck die ersten Sollbruchstellenbrücken 5 zerstört werden und das Schneidelement 3 mit seinem Aussengewinde 31 ebenfalls ratschenartig über das Innengewinde 22 des Ausgussstutzens 2 gleitet, bis alle drei Teile in ihre definierte Endposition gelangen, so dass nun die verschliessbare Öffnungsvorrichtung im montierten Zustand ist, in der die Öffnungsvorrichtung auf einem versiegeltem Behältnis aufgeklebt oder aufgeschweisst werden kann. Bei der Erstöffnung wird nun die Schraubkappe 4 nach oben gedreht, dabei verschiebt sich das Schneidelement 3 in einer helikalen Bewegung nach unten, wobei die Zähne 35 das Behältnis, welches aus einem ein- oder mehrlagigen Laminat oder Folienmaterial besteht, aufschneidet, wobei gleichzeitig das Garantieband 44 abgetrennt wird.

Dank dem erfindungsgemässen Halbfabrikat werden weniger Ausrichtbewegungen bei der Montage erforderlich, womit die Montagevorrichtung als solches einfacher wird, schneller arbeiten kann und weniger Störungen auftreten, womit die Effizienz weiter gesteigert wird. Dank dem, dass nur noch eine einzige Spritzgussform benötigt wird, können mit weniger Spritzgussmaschinen mehr Öffnungsvorrichtungen gefertigt werden. All diese Vorteile führen zu erheblichen Kosteneinsparungen, die um so mehr ins Gewicht fallen, da es sich bei den hier interessierenden Öffnungsvorrichtungen um Elemente handelt, die in Milliarden Stückzahlen gefertigt werden müssen.

### Bezugszeichenliste:

- 1: Halbfabrikat
- 100: Oeffnungsvorrichtung
- 2: Ausgussstutzen
- 3: Schneidelement
- 4: Schraubkappe
- 5: erste Sollbruchstellenbrücken
- 6: zweite Sollbruchstellenbrücken
- 6': Sollbruchstellenbrückenreste auf oberem Rand 32
- 6'': Sollbruchstellenbrückenreste auf Deckfläche
- 20: zylindrische Mantelwand
- 21: Flansch
- 22: Innengewinde
- 23: Aussengewinde
- 25: oberer Rand der Mantelwand
- 30: zylindrischer Mantelwandabschnitt
- 31: Aussengewinde
- 32: oberer Rand
- 33: unterer Rand
- 34: innere Mantelwandfläche
- 35: Zähne
- 36: Mitnehmer
- 38: Absatz
- 40: Mantelwand
- 41: Deckfläche
- 42: Innengewinde
- 43: Sollbruchstellen
- 44: Garantieband
- 45: Ringwand als Dichtung
- 46: Mitnehmer
- 47: Rippung

## Patentansprüche

1. Halbfabrikat zur Fertigung einer verschliessbaren Öffnungsvorrichtung (100) für eine versiegelte Verpackung, die ein fliessfähiges Medium enthält, wobei die Vorrichtung einen Ausgussstutzen (2) mit Flansch (21) aufweist, sowie ein zylindrisches Schneidelement (3), welches mit einem oberen, eine plane Fläche definierenden Rand (32) versehen ist, während der untere Rand (33) mit einem oder mehreren Zähnen (35) ausgestattet ist, und dessen innere Mantelfläche mit in radialer Richtung wirkenden Mitnehmern (36) versehen ist, die mit Mitnehmern (46) an der Innenseite der Deckfläche in einer Schraubkappe (4) zusammenwirken, **dadurch gekennzeichnet, dass** das zylindrische Schneidelement (3) des Halbfabrikates (1) mit seinem unteren Rand (33), an den die Zähne (35) angeformt sind, in dem Ausgussstutzen (2) hineinragt, während der obere plane Rand (32) des zylindrischen Schneidelementes (3) den oberen Rand (35) des Ausgussstutzens (2) im unmontierten Zustand des Halbfabrikates (1) überragt und die Schraubkappe (4) mit ihrer Deckfläche zum Rand (32) der Schneidelementes gerichtet ist, und zwar so, dass der Ausgussstutzen (2) mit dem Schneidelement (3) und das Schneidelement (3) mit der Schraubkappe (4) über erste und zweite Sollbruchstellenbrücken (5,6) trennbar einstückig gefertigt sind.

2. Halbfabrikat nach Anspruch 1, **dadurch gekennzeichnet, dass** das Schneidelement (3) ein Aussengewinde (31) aufweist, welches mit einem Innengewinde (22) im Ausgussstutzen (2) zusammenpasst.

3. Halbfabrikat nach Anspruch 1, **dadurch gekennzeichnet, dass** das Schneidelement (3) Führungsmittel aufweist, die mit einer Kulissenführung im Ausgussstutzen zusammenpassen.

4. Halbfabrikat nach Anspruch 1, **dadurch gekennzeichnet, dass** am unteren Rand (33) des Schneidelementes (3) oberhalb der Zähne ein nach aussen auskragender umlaufender Absatz (38) vorhanden ist.

5. Halbfabrikat nach Anspruch 4, **dadurch gekennzeichnet, dass** im Bereich des Absatzes (38) mehrere erste Sollbruchstellenbrücken (5) vorhanden sind, die mit einem spitzen Ende radial nach aussen gerichtet sind und im Bereich des oberen Randes (25) des Ausgussstutzens (2) mit demselben verbunden sind.

6. Halbfabrikat nach Anspruch 5, **dadurch gekennzeichnet, dass** die ersten Sollbruchstellenbrücken (5) einen unteren oder oberen Rand aufweisen, welcher exakt radial zur Mantelwand (20) des Ausgussstutzens (2) hin gerichtet ist und mindestens annähernd mit dem oberen Rand (25) des Ausgussstutzens (2) fluchtet.

7. Halbfabrikat nach Anspruch 1, **dadurch gekennzeichnet, dass** die ersten Sollbruchstellenbrücken (5) zu einer umlaufenden zerstörbaren ringförmigen Membran gestaltet sind.

8. Halbfabrikat nach Anspruch 1, **dadurch gekennzeichnet, dass** die Deckfläche (41) der Schraubkappe (4) eine zentrische Vertiefung aufweist, deren Durchmesser dem Innendurchmesser des zylindrischen Schneidelementes (3) entspricht und die zweiten Sollbruchstellenbrücken (6) mit einer Kante der zentrischen Vertiefung fluchtend angeordnet sind.

9. Verfahren zur Fertigung einer verschliessbaren Oeffnungsvorrichtung aus einem Halbfabrikat nach einem der Ansprüche 1-7, **dadurch gekennzeichnet, dass** in einem ersten Schritt die Schraubkappe (4) gefasst und durch eine Relativbewegung der Schraubkappe zum Rest (2,3) des Halbfabrikates diese vom Rest des Halbfabrikates getrennt wird;
dass in einem zweiten Schritt die Schraubkappe (4) so gewendet und ausgerichtet wird, dass die Schraubkappe mit ihrer Oeffnung so auf den Ausgussstutzen (2) ausgerichtet wird, dass dieser in eine korrekte, aufschraubbare Position gebracht ist und
dass in einem dritten Schritt durch eine axiale Bewegung die zweiten Sollbruchstellenbrücken (6) zwischen dem Ausgussstutzen (2) und dem Schneidelement (3) getrennt und die Schraubkappe (4) auf den Ausgussstutzen (2) und das Schneidelement (3) in den Ausgussstutzen geschoben werden, so dass die Oeffnungsvorrichtung (100) in ihren zusammengebauten Zustand gelangt.

10. Verfahren nach Anspruch 9, **dadurch gekennzeichnet, dass** die im ersten Schritt durchgeführte Relativbewegung eine rotative Bewegung ist.

11. Verfahren nach Anspruch 9, **dadurch gekennzeichnet, dass** die im ersten Schritt durchgeführte Relativbewegung eine translatorische Bewegung ist.

12. Aus einem Halbfabrikat nach Anspruch 1 gefertigte, verschliessbare Oeffnungsvorrichtung (100) für eine versiegelte Verpackung, die ein fliessfähiges Medium enthält, wobei die Vorrichtung einen Ausgussstutzen (2) mit Flansch (21) aufweist, sowie ein zylindrisches Schneidelement (3), welches mit einem oberen, eine plane Fläche definierenden Rand (32) versehen ist, während der untere Rand (33) mit einem oder mehreren Zähnen (35) ausgestattet ist, und dessen innere Mantelfläche mit in radialer Richtung wirkenden Mitnehmern (36) versehen ist, die mit Mitnehmern (46) an der Innenseite der Deckfläche in einer Schraubkappe (4) zusammenwirken, **dadurch gekennzeichnet, dass** auf der Deckfläche (41) der Schraubkappe (4) mehrere Sollbruchstellenbrückenreste (6") und am planen Rand (32) des Schneidelementes (3) ebenso viele Sollbruchstellenbrückenreste (6') erkennbar sind.

## Claims

1. A semi-finished product for the manufacture of a closable opening device (100) for a sealed packaging which contains a flowable medium, wherein the device comprises a pour-out spout (2) with a flange (21), as well as a cylindrical cutting element (3) which is provided with an upper edge (32) defining a plane surface whilst the lower edge (33) is equipped with one or more teeth (35), and the inner peripheral surface thereof is provided with catches (36) which act in a radial direction and which cooperate with catches (46) on the inner side of the cover surface in a screw cap (4), **characterised in that** the cylindrical cutting element (3) of the semi-finished product (1) with its lower edge (33) on which the teeth (35) are integrally formed, projects into the pour-out spout (2), whilst the upper plane edge (32) of the cylindrical cutting element (3) projects beyond the upper edge (35) of the pour-out spout (2) in an unassembled state of the semi-finished product (1), and the screw cap (4) with its cover surface is directed to the edge (32) of the cutting element, and specifically such that the pour-out spout (2) with the cutting element (3) and the cutting element (3) with the screw cap (4) are manufactured in a separable manner as one piece via first and second predetermined breaking-point bridges (5, 6).

2. The semi-finished product according to claim 1, **characterised in that** the cutting element (3) comprises an outer thread (31) which fits together with an inner thread (22) in the pour-out spout (2).

3. The semi-finished product according to claim 1, **characterised in that** the cutting element (3) comprises guide means which fit together with a groove guide in the pour-out spout.

4. The semi-finished product according to claim 1, **characterised in that** an outwardly projecting peripheral shoulder (38) is provided on the lower edge (33) of the cutting element (3) above the teeth.

5. The semi-finished product according to claim 4, **characterised in that** a plurality of first predetermined breaking-point bridges (5) are provided near the shoulder (38) which are directed radially outwards with a pointed end and near the upper edge (25) of the pour-out spout (2) are connected to said pour-out spout.

6. The semi-finished product according to claim 5, **characterised in that** the first predetermined breaking-point bridges (5) have a lower edge or an upper edge which is directed exactly radially to the peripheral wall (20) of the pour-out spout (2) and is at least approximately flush with the upper edge (25) of the pour-out spout (2).

7. The semi-finished product according to claim 1, **characterised in that** the first predetermined breaking-point bridges (5) are configured as a peripheral, destructible annular membrane.

8. The semi-finished product according to claim 1, **characterised in that** the cover surface (41) of the screw cap (4) comprises a centric recess with a diameter that corresponds to the inner diameter of the cylindrical cutting element (3) and the second predetermined breaking-point bridges (6) are arranged flush with an edge of the centric recess.

9. A method for manufacturing a closable opening device from a semi-finished product according to any one of claims 1-7, **characterised in that** in a first step the screw cap (4) is gripped and by way of a relative movement of the screw cap to a remainder (2, 3) of the semi-finished product, said screw cap is separated from the remainder of the semi-finished product;
that in a second step the screw cap (4) is turned and aligned so that the screw cap with its opening is aligned onto the pour-out spout (2) in such a manner that this is brought into a correct position capable of being screwed on and
that in a third step by an axial movement, the second predetermined breaking-point bridges (6) between the pour-out spout (2) and the cutting element (3) are separated and the screw cap (4) is pushed onto the pour-out spout (2), and the cutting element (3) is pushed into the pour-out spout so that the opening device (100) attains its assembled state.

10. The method according to claim 9, **characterised in that** the relative movement carried out in the first step is a rotation movement.

11. The method according to claim 9, **characterised in that** the relative movement carried out in the first step is a translatory movement.

12. A closable opening device (100) manufactured from a semi-finished product according to claim 1 for a sealed package which contains a flowable medium, wherein the device comprises a pour-out spout (2) with flange (21), as well as a cylindrical cutting element (3) which is provided with an upper edge (32) defining a plane surface whilst the lower edge (33) is equipped with one or more teeth (35), and the inner peripheral surface thereof is provided with catches (36) which act in the radial direction and which cooperate with catches (46) on the inner side of the cover surface in a screw cap (4), **characterised in that** a plurality of predetermined breaking-point bridge remainders (6'') can be identified on the cover surface (41) of the screw cap (4), and just as many predetermined breaking-point bridge remainders (6') can be identified on the plane edge (32) of the cutting element (3).

## Revendications

1. Produit semi fini pour la fabrication d'un dispositif d'ouverture verrouillable (100) pour un emballage scellé, qui contient un milieu fluide, le dispositif comportant un bec verseur (2) avec collerette (21) ainsi qu'un élément tranchant (3), qui est muni d'un bord supérieur (32) définissant une surface plane, alors que le bord inférieur (33) est muni d'une ou de plusieurs dents (35) et que la surface d'enveloppe de ce dernier est dotée d'entraîneurs (36) agissant en direction radiale, qui coopèrent avec des entraîneurs (46) sur la face intérieure de la surface de recouvrement dans un capuchon à visser (4), **caractérisé en ce que** l'élément tranchant cylindrique (3) du produit semi-fini (1) saillit par son bord inférieur (33) sur lequel sont rapportées les dents (35) dans le bec verseur (2) alors que, lorsque le produit semi-fini (1) n'est pas monté, le bord supérieur plan (32) de l'élément tranchant cylindrique (3) surplombe le bord supérieur (35) du bec verseur (2) et le bouchon à visser (4) est dirigé par sa surface de recouvrement vers le bord (32) de l'élément tranchant, de telle sorte que le bec verseur (2) avec l'élément tranchant (3) et l'élément tranchant (3) avec le bouchon à visser (4) soient fabriqués en monobloc en étant séparables via des premières et des deuxièmes barrettes de rupture (5, 6).

2. Produit semi fini selon la revendication 1, **caractérisé en ce que** l'élément tranchant (3) comporte un filetage extérieur (31) qui est adapté à un taraudage (22) dans le bec verseur (2).

3. Produit semi fini selon la revendication 1, **caractérisé en ce que** l'élément tranchant (3) comporte des moyens de guidage, qui sont adaptés à un guidage à coulisse dans le bec verseur.

4. Produit semi-fini selon la revendication 1, **caractérisé en ce que** sur le bord inférieur (33) de l'élément tranchant (3) au-dessus des dents se trouve un talon périphérique (38) débordant vers l'extérieur.

5. Produit semi-fini selon la revendication 4, **caractérisé en ce que** dans la région du talon (38) se trouvent plusieurs barrettes de rupture (5) qui par une extrémité pointue sont orientées en direction radiale vers l'extérieur et qui dans la région du bord supérieur (25) du bec verseur (2) sont reliées à ce dernier.

6. Produit semi-fini selon la revendication 5, **caractérisé en ce que** les premières barrettes de rupture (5) comportent un bord inférieur ou supérieur, qui est précisément orienté en direction radiale vers la paroi de l'enveloppe (20) du bec verseur (2) et qui est aligné au moins approximativement sur le bord supérieur (25) du bec verseur (2).

7. Produit semi-fini selon la revendication 1, **caractérisé en ce que** les premières barrettes de rupture (5) sont conçues en une membrane annulaire destructible.

8. Produit semi-fini selon la revendication 1, **caractérisé en ce que** la surface de recouvrement (41) du capuchon à visser (4) comporte un creux central dont le diamètre correspond au diamètre intérieur de l'élément tranchant cylindrique (3) et **en ce que** les deuxièmes barrettes de rupture (6) sont disposées en étant alignées sur une arête du creux central.

9. Procédé de fabrication d'un dispositif d'ouverture verrouillable à partir d'un produit semi-fini selon l'une quelconque des revendications 1 à 7, **caractérisé en ce que** dans une première étape, on saisit le capuchon à visser (4) et **en ce que** par un mouvement relatif du capuchon à visser par rapport au reste (2, 3) du produit semi-fini, on sépare celui-ci du produit semi-fini ;
**en ce que** dans une deuxième étape, on fait tourner et on oriente le capuchon à visser (4), de sorte que par son ouverture, le capuchon à visser soit orienté en direction du bec verseur (2) de telle sorte que ce dernier soit amené dans une position correcte pour être dévissé et
**en ce que** dans une troisième étape, on sépare les deuxièmes barrettes de rupture (6) entre le bec verseur (2) et l'élément tranchant (3) et **en ce qu'**on pousse le capuchon à visser (4) sur le bec verseur (2) et l'élément tranchant (3) dans le bec verseur, de sorte à amener le dispositif d'ouverture (100) dans son état monté.

10. Procédé selon la revendication 9, **caractérisé en ce que** le mouvement relatif effectué dans la première étape est un mouvement de rotation.

11. Procédé selon la revendication 9, **caractérisé en ce que** le mouvement relatif effectué dans la première étape est un mouvement de translation.

12. Dispositif d'ouverture verrouillable (100) pour un emballage scellé contenant un milieu fluide fabriqué à partir d'un produit semi-fini selon la revendication 1, le dispositif comportant un bec verseur (2) avec collerette (21) ainsi qu'un élément tranchant cylindrique (3), qui est muni d'un bord supérieur (32) définissant une surface plane, alors que le bord inférieur (33) est doté d'une ou de plusieurs dents (35), et sa surface d'enveloppe intérieure est munie d'entraîneurs (36) agissant en direction radiale qui coopèrent avec des entraîneurs (46) sur la face intérieure de la surface de recouvrement dans un capuchon à visser (4), **caractérisé en ce que** sur la surface de recouvrement (41) du capuchon à visser (4) on peut identifier plusieurs restes de barrettes de rupture (6") et un nombre correspondant de restes de barrettes de rupture (6') sur le bord (32) de l'élément tranchant (3).
